# EUROPEAN PATENT APPLICATION

(11) **EP 4 796 486 A1**
(43) Date of publication of application: **26.08.2026**
(21) Application number: 24866574.7
(22) Date of filing: 23.08.2024
(51) Int. Cl.: B66F 9/02, B66F 9/18, B65H 75/38

(54) **MATERIAL FEEDING AND DISCHARGING MACHINE AND BATTERY PRODUCTION DEVICE**

(30) Priority: 20.10.2023 CN 202322837683 U
(71) Applicant: Wuxi Lead Intelligent Equipment Co., Ltd., Wuxi, Jiangsu 214028 (CN)
(72) Inventor: LIANG, Hao, Wuxi, Jiangsu 214028 (CN); TU, Xinping, Wuxi, Jiangsu 214028 (CN); YAN, yulong, Wuxi, Jiangsu 214028 (CN)
(74) Representative: Rau, Schneck & Hübner Patentanwälte Rechtsanwälte PartGmbB
(86) International application number: PCT/CN2024/114340
(87) International publication number: WO 2025/082037

(57) **Abstract**

The present disclosure discloses a loading-unloading machine for a material, which comprises: a winding-unwinding device comprising a device reel; an elevation device comprising an elevation mechanism and a second carrying arm connected to the elevation mechanism, the elevation mechanism being capable of driving the second carrying arm to ascend to a height where the device reel is located, thereby enabling the material to be transferred between the device reel and the second carrying arm; a translation device provided with a translation mechanism and a third carrying arm connected to the translation mechanism; a transport vehicle provided with a vehicle body and a fourth carrying arm connected to the vehicle body; through the lifting of the elevation mechanism, the translation of the translation mechanism, and the movement of the transport vehicle, it is possible to realize the transfer of the material between the winding-unwinding device and the transport vehicle, and then realize the winding of the material in the winding-unwinding device, and transport the material to a desired position. Compared with transportation tools such as AGV and the like, the way of loading and unloading the material by a special tool as in the present disclosure may reduce transportation costs and improve transportation efficiency. The present disclosure further discloses a battery production apparatus.

## Description

### CROSS-REFERENCE TO RELATED APPLICATIONS

The present disclosure claims priority to a Chinese patent application No. 202322837683.3 filed with the CNIPA on October 20, 2023 and entitled "LOADING-UNLOADING MACHINE FOR MATERIAL AND BATTERY PRODUCTION APPARATUS", which is hereby incorporated by reference in its entirety.

### TECHNICAL FIELD

The present disclosure relates to the technical field of battery production, and particularly to a loading-unloading machine for a material and a battery production apparatus.

### BACKGROUND

In the production process of power lithium-ion batteries, the weight of a single coil can reach several hundred kilograms. Therefore, automated guided vehicles (AGVs) are typically employed for the loading and unloading of these coils.

However, the AGV and similar devices are expensive, leading to high transportation costs. Furthermore, the process of loading and unloading the coil using AGVs is relatively cumbersome, resulting in low efficiency for these operations. Consequently, there is a need to develop specialized apparatus for loading and unloading of coils.

### SUMMARY

An embodiment of the present disclosure provides a loading-unloading machine for a material and a battery production apparatus, which addresses the problem of low loading and unloading efficiency of coils in existing technologies.

To achieve the above objective, in a first aspect, the present disclosure discloses a loading-unloading machine for a material, comprising: an elevation device comprising an elevation mechanism and a second carrying arm connected to the elevation mechanism, the elevation mechanism being capable of driving the second carrying arm to ascend so as to receive or release the material; a translation device provided with a translation mechanism and a third carrying arm connected to the translation mechanism; wherein the elevation mechanism is capable of guiding the second carrying arm to descend to a height where the third carrying arm is located, and the translation mechanism is capable of driving the third carrying arm to approach the elevation device, thereby enabling the material to be transferred between the second carrying arm and the third carrying arm; and a transport vehicle provided with a vehicle body and a fourth carrying arm connected to the vehicle body; wherein the translation mechanism is capable of driving the third carrying arm to move away from the elevation device, and the fourth carrying arm is capable of approaching the translation device along with the vehicle body, thereby enabling the material to be transferred between the third carrying arm and the fourth carrying arm.

Optionally, further comprising a winding-unwinding device with a device reel; the third carrying arm and the device reel are respectively located at different heights of the loading-unloading machine; the second carrying arm is capable of ascending to a height where the device reel is located, thereby enabling the material to be transferred between the device reel and the second carrying arm.

Optionally, the winding-unwinding device further comprises a material stripping mechanism, wherein the device reel is a roller shaft, and the device reel is configured for enabling the material to be movably sleeved onto it; the second carrying arm is capable of ascending to a height where the device reel is located, such that the material stripping mechanism is capable of guiding the material sleeved onto the device reel to move in an axial direction of the device reel, and transferring the material from the device reel to the second carrying arm.

Optionally, the elevation device further comprises a material pushing mechanism provided on the second carrying arm; the second carrying arm is a roller shaft, and is configured for enabling the material to be movably sleeved onto it, and the second carrying arm is capable of ascending to a height where the device reel is located, such that the material pushing mechanism is capable of guiding the material sleeved onto the second carrying arm to move in an axial direction of the second carrying arm so as to release the material.

Optionally, the second carrying arm has a retractable restraining component provided at one end thereof facing toward the device reel, and the material is capable of being sleeved onto the second carrying arm, such that the restraining component is capable of extending outward from the second carrying arm to restrain the material.

Optionally, the second carrying arm comprises a cantilever section and a shaft section, wherein the elevation mechanism, the cantilever section, and the shaft section are connected in sequence; the restraining component is provided at one end of the shaft section facing away from the cantilever section; the cantilever section, at a part of an end face thereof, is configured for connecting the shaft section, and at another part of the end face, forms a shaft shoulder facing toward the shaft section, and the material sleeved onto the shaft section is capable of being restrained between the shaft shoulder and the restraining component.

Optionally, the elevation device further comprises a rotating mechanism, wherein the rotating mechanism, the elevation mechanism, and the second carrying arm are connected in sequence; the rotating mechanism is capable of driving the second carrying arm to rotate along with the elevation mechanism, so as to adjust a transporting direction of the second carrying arm to be parallel to a transporting direction of the device reel, and, to adjust a transporting direction of the second carrying arm to be parallel to a transporting direction of the third carrying arm.

Optionally, the third carrying arm is provided in a plurality along a translation direction of the translation mechanism; each third carrying arm is an overhanging structure, and is provided with a groove in which at least a portion of the material is accommodated.

Optionally, the fourth carrying arm is provided in a plurality along a translation direction of the translation mechanism; each fourth carrying arm is an overhanging structure, and is provided with a groove in which at least a portion of the material is accommodated.

Optionally, the transport vehicle further comprises a lifting mechanism connected to the fourth carrying arm; wherein the translation mechanism is capable of driving the third carrying arm to move away from the elevation device, and the fourth carrying arm is capable of approaching the translation device along with the vehicle body, such that the lifting mechanism is capable of driving the fourth carrying arm to ascend and descend, enabling it to pick up the material on the third carrying arm, or to transfer the material located on the fourth carrying arm to the third carrying arm.

According to a second aspect, the present disclosure discloses a battery production apparatus, comprising the loading-unloading machine.

Compared with the prior art, the beneficial effects of the present application are:
the loading-unloading machine for a material of the present disclosure comprises: a winding-unwinding device comprising a device reel; an elevation device comprising an elevation mechanism and a second carrying arm connected to the elevation mechanism, the elevation mechanism being capable of driving the second carrying arm to ascend to a height where the device reel is located, thereby enabling the material to be transferred between the device reel and the second carrying arm; a translation device provided with a translation mechanism and a third carrying arm connected to the translation mechanism, the third carrying arm and the device reel being respectively located at different heights of the loading-unloading machine; when the elevation mechanism guides the second carrying arm to descend to a height where the third carrying arm is located, and the translation mechanism drives the third carrying arm to approach the elevation device, thereby enabling the material to be transferred between the second carrying arm and the third carrying arm; a transport vehicle provided with a vehicle body and a fourth carrying arm connected to the vehicle body; when the translation mechanism drives the third carrying arm to move away from the elevation device, and the fourth carrying arm approaches the translation device along with the vehicle body, thereby enabling the material to be transferred between the third carrying arm and the fourth carrying arm. The material herein may a cartridge full of coils or a cartridge empty of the coil.

In this way, through the lifting of the elevation mechanism, the translation of the translation mechanism, and the movement of the transport vehicle, it is possible to achieve the transfer of the material between the second carrying arm and the third carrying arm, as well as between the third carrying arm and the fourth carrying arm, and ultimately between the winding-unwinding device and the transport vehicle. This allows for winding of the winding-unwinding device, and transportation of materials to desired positions. Compared with transportation tools such as AGV and the like, the way of loading and unloading the material by a special tool as in the present disclosure can reduce transportation costs and improve transportation efficiency.

### BRIEF DESCRIPTION OF THE DRAWINGS

In order to clearly illustrate the technical solutions of embodiments of the present disclosure, accompanying drawings that need to be used in the embodiments will be briefly introduced as follows. It is evident that drawings in following description are only the embodiments of the present disclosure. For those skilled in the art, other drawings can also be obtained according to the disclosed drawings without creative efforts.
FIG. 1 is a first state diagram showing a loading-unloading machine disclosed in the present disclosure transporting a coil;
FIG. 2 is a second state diagram showing the loading-unloading machine disclosed in the present disclosure transporting the coil;
FIG. 3 is a top view of FIG. 2 disclosed in the present disclosure;
FIG. 4 is a third state diagram showing the loading-unloading machine disclosed in the present disclosure transporting the coil;
FIG. 5 is a top view of FIG. 4 disclosed in the present disclosure;
FIG. 6 is a fourth state diagram showing the loading-unloading machine disclosed in the present disclosure transporting the coil;
FIG. 7 is a top view of FIG. 6 disclosed in the present disclosure;
FIG. 8 is a fifth state diagram showing the loading-unloading machine disclosed in the present disclosure transporting the coil;
FIG. 9 is a top view of FIG. 8 disclosed in the present disclosure.

### Description of reference signs:

1-coil, 10-winding-unwinding device, 11-device reel, 12-material stripping mechanism, 20-elevation device, 21-elevation mechanism, 22-second carrying arm, 221-cantilever section, 222-shaft section, 23-material pushing mechanism, 24-restraining component, 25-rotating mechanism, 30-translation device, 31-translation mechanism, 311-base, 312-slider, 32-third carrying arm, 33-groove, 331-padding, 40-transport vehicle, 41-vehicle body, 43-lifting mechanism, 42-fourth carrying arm.

### DETAILED DESCRIPTION

The following description will clearly and completely describe the technical solutions in the embodiments of the present disclosure in conjunction with the drawings in the embodiments of the present disclosure. It is evident that the described embodiments are only part of the embodiments of the present disclosure, not all of them. Based on the embodiments in the present disclosure, all other embodiments obtained by those skilled in the art without creative labor fall within the scope of protection of the present disclosure.

In the present disclosure, an orientation or positional relationship indicated by terms "up", "down", "left", "right", "front", "back", "top", "bottom", "inner", "outer", "vertical", "horizontal", "transverse", "longitudinal", etc., is based on the orientation or positional relationship shown in the accompanying drawings. These terms are mainly intended to better describe the present disclosure and its embodiments, rather than to limit that the indicated devices, components, or parts must have specific orientations or be constructed and operated in specific orientations.

Moreover, some of these terms may also be used to indicate other meanings besides indicating orientation or positional relationships. For example, the term "up" may also indicate a certain attachment relationship or connection relationship in certain cases. Those skilled in the art may understand the specific meanings of these terms in the present disclosure according to specific situations.

In addition, terms "installed", "disposed", "provided with", "connected", and "in communication with" should be interpreted in a broad sense. For example, it can be a fixed connection, a detachable connection, or an integrated construction; it can be a mechanical connection or an electrical connection; it can be directly connected, or indirectly connected through an intermediate medium, and it can be an internal communication between two devices, elements or parts. For those of ordinary skill in the art, specific meanings of the above terms in the present disclosure can be understood according to specific situations.

In addition, terms such as "first", "second", etc., are mainly used to distinguish different devices, elements, or parts (which may be the same or different in specific types and structures), and do not imply or suggest relative importance and quantity of the indicated devices, elements, or parts. Unless otherwise stated, the term "plurality" means two or more.

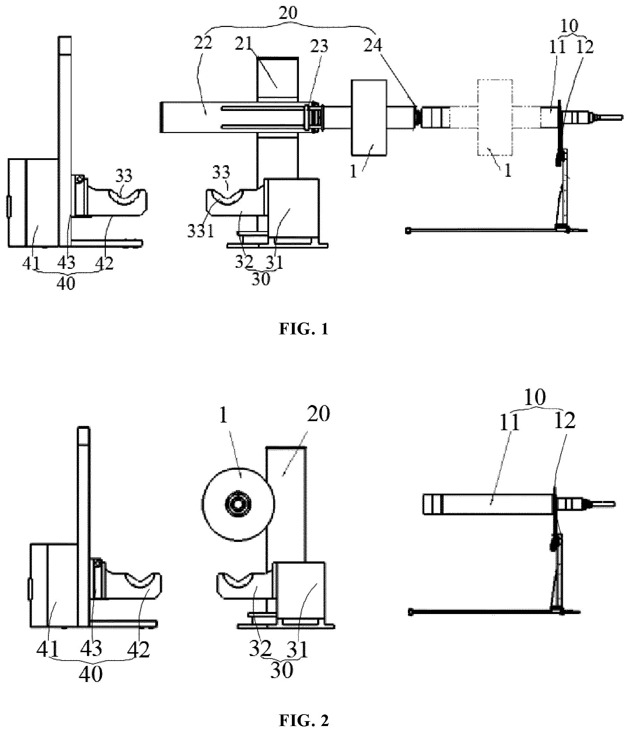

In the related art, loading and unloading coils is generally performed using automated guided vehicles (AGVs). However, AGVs and similar devices are expensive, leading to high transportation costs. Additionally, the process of loading and unloading the coil using AGVs is relatively cumbersome, resulting in low efficiency for these operations. To address these issues, the technical solution of the present disclosure has been developed, which will be described below in conjunction with FIGS. 1 to 9.

Please refer to FIG. 1, the present disclosure discloses a loading-unloading machine for a material 1, which comprises: a winding-unwinding device 10, an elevation device 20, a translation device 30, and a transport vehicle 40.

Here, the winding-unwinding device 10 comprises both an unwinding device and a winding device, as well as a device reel 11, which is used for storing a full or empty volume of material 1. The elevation device 20 may comprise an elevation mechanism 21 and a second carrying arm 22 connected to the elevation mechanism 21. The elevation mechanism 21 may be a screw drive mechanism, a cylinder mechanism, or the like, and may drive the second carrying arm 22 to ascend so as to receive or release the material 1. Specifically, the second carrying arm 22 may ascend to a height where the device reel 11 is located, thereby enabling the material 1 to be transferred between the device reel 11 and the second carrying arm 22. The material 1 here can be an empty cartridge, denoted as an "empty volume" of material 1, or a cartridge full of coils, denoted as a "full volume" of material 1.

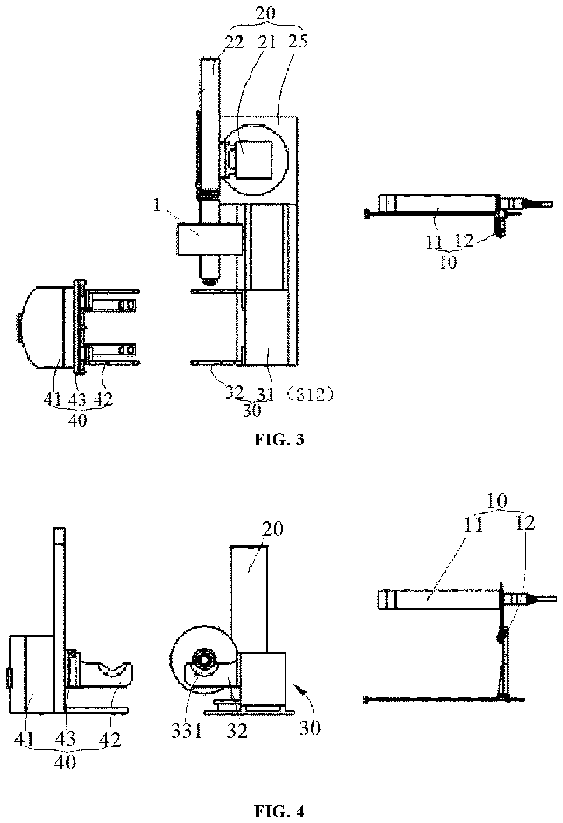

The translation device 30 may be provided with a translation mechanism 31 and a third carrying arm 32 connected to the translation mechanism 31. The third carrying arm 32 and the device reel 11 are respectively located at different heights of the loading-unloading machine. The elevation mechanism 21 may guide the second carrying arm 22 to descend to a height where the third carrying arm 32 is located, and the translation mechanism 31 may drive the third carry arm 32 to approach the elevation device 20, thereby enabling the material 1 to be transferred between the second carrying arm 22 and the third carrying arm 32. As shown in FIG. 3, the translation mechanism 31 may comprise a base 311 and a slider 312 slidably connected to the base 311. The base 311 may be provided therein with a driving device such as a screw mechanism for connecting the slider 312, which can drive the slider 312 to move relative to the base 311, thereby guiding the third carrying arm 32 to move.

The transport vehicle 40 may be provided with a vehicle body 41 and a fourth carrying arm 42 connected to the vehicle body 41; the translation mechanism 31 is capable of driving the third carrying arm 32 to move away from the elevation device 20, and the fourth carrying arm 42 is capable of approaching the translation device 30 along with the vehicle body 41, thereby enabling the material 1 to be transferred between the third carrying arm 32 and the fourth carrying arm 42.

The loading-unloading machine of the present disclosure may operate according to the following steps:
First, the process of unloading the material 1 is described as follows:
As shown in FIG. 1, the device reel 11 stores a full volume of material 1, the elevation mechanism 21 drives the second carrying arm 22 to ascend until the second carrying arm 22 and the device reel 11 are at the same height, and then the full volume of material 1 is transferred from the device reel 11 to the second carrying arm 22.

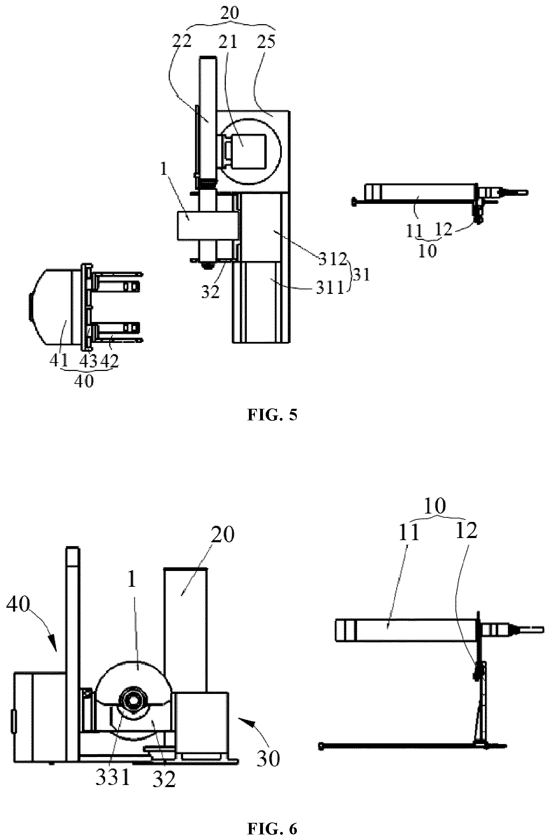

As shown in FIGS. 4 and 5, after the second carrying arm 22 receives the full volume of material 1, the translation mechanism 31 drives the third carrying arm 32 to approach the elevation device 20, until the third carrying arm 32 corresponds to the second carrying arm 22 in the elevation direction of the elevation device 20; then, the elevation mechanism 21 guides the second carrying arm 22 to descend to a height where the third carrying arm 32 is located, such that the full volume of material 1 is received by the third carrying arm 32.

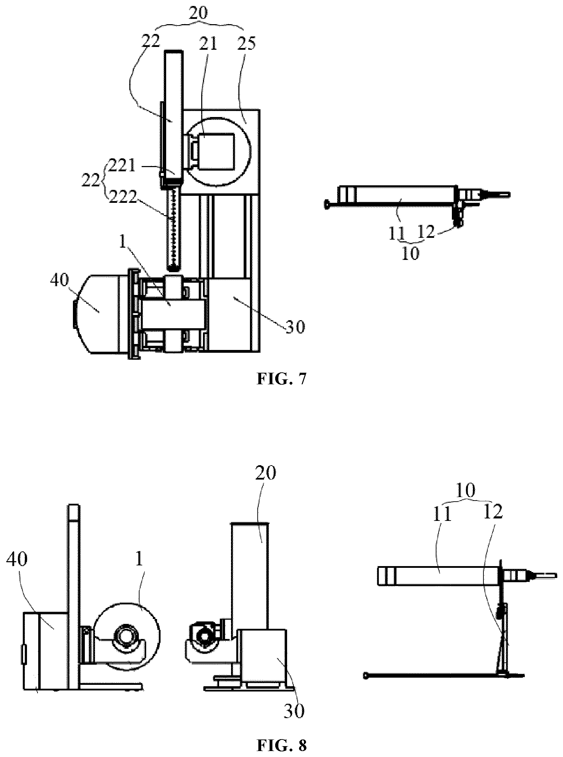

As shown in FIGS. 6 and 7, after the full volume of material 1 is received by the third carry arm 32, the translation mechanism 31 drives the third carrying arm 32 to move away from the elevation device 20, until the slider 312 connected to the third carrying arm 32 corresponds to the transport vehicle 40 in the transporting direction of the transport vehicle 40; subsequently, the fourth carrying arm 42 approaches the translation device 30 along with the vehicle body 41, such that the full volume of material 1 is transferred from the third carrying arm 32 to the fourth carrying arm 42.

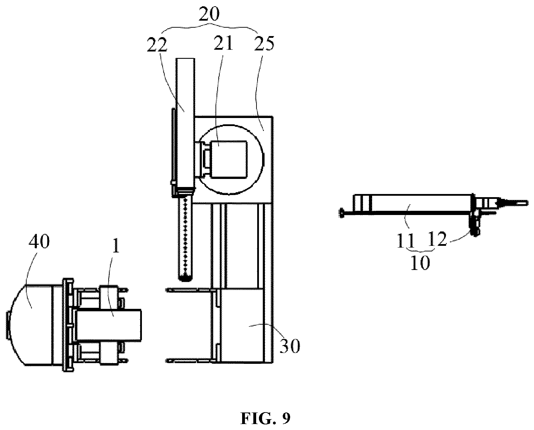

As shown in FIGS. 8 and 9, after the fourth carrying arm 42 receive the full volume of material 1, the transport vehicle 40 moves back to get away from the translation device 30, so as to transport the full volume of material 1 to a predetermined position.

Then, the process of loading the material 1 is described as follows:
As shown in FIGS. 8 and 9, the empty volume of material 1 is loaded on the fourth carrying arm 42; the translation mechanism 31 drives the third carrying arm 32 to move away from the elevation device 20, until the slider 312 connected to the third carrying arm 32 corresponds to the transport vehicle 40 in the transporting direction of the transport vehicle 40.

As shown in FIGS. 6 and 7, the fourth carrying arm 42 approaches the translation device 30 along with the vehicle body 41, such that the empty volume of material 1 is transferred from the fourth carrying arm 42 to the third carrying arm 32.

As shown in FIGS. 4 and 5, while the third carrying arm 32 receives the empty volume of material 1, the elevation mechanism 21 guides the second carrying arm 22 to descend to a height where the third carrying arm 32 is located; the translation mechanism 31 then drives the third carrying arm 32 to approach the elevation device 20, such that the empty volume of material 1 is transferred from the third carrying arm 32 to the second carrying arm 22.

As shown in FIGS. 4 and 5, after the second carrying arm 22 receives the empty volume of material 1, it will ascend to a height where the device reel 11 is located, and the empty volume of material 1 is then transferred from the second carrying arm 22 to the device reel 11.

Subsequently, the empty volume of material 1 is wound in the winding-unwinding device 10, so as to form the full volume of material 1. Then, the process of unloading the material 1 may be performed, so as to transfer the full volume of material 1 from the winding-unwinding device 10 to the transport vehicle 40.

In this way, through the lifting of the elevation mechanism, the translation of the translation mechanism, and the movement of the transport vehicle, it is possible to realize the transfer of the coil between the second carrying arm and the third carrying arm, and between the third carrying arm and the fourth carrying arm, and then realize the transfer of the material 1 between the winding-unwinding device 10 and the transport vehicle 40, and then realize the winding of coil in the winding-unwinding device, and transport the coil to a desired position. Compared with transportation tools such as AGVs and the like, the way of loading and unloading the material by a special tool as in the present disclosure may reduce transportation costs and improve transportation efficiency.

Further, the elevation device 20 may be provided with a sensor for restraining, such as an upper limit sensor and a lower limit sensor. The elevation device 20 is provided with a controller therein for connecting the elevation mechanism 21, the upper limit sensor and the lower limit sensor respectively. When the second carrying arm 22 ascends to a preset upper limit, it may be determined that the second carrying arm 22 corresponds to the device reel 11, and the upper limit sensor sends a pause signal to the controller of the elevation device 20. Alternatively, when the second carrying arm 22 descends to a preset lower limit height, it may be determined that the second carrying arm 22 corresponds to the third carrying arm 32. At this time, the upper limit sensor also sends a pause signal to the controller of the elevation device 20.

The controller may receive the pause signal and control the elevation mechanism 21 to stop driving the second carrying arm 22 according to the pause signal, thereby preventing the second carrying arm 22 from moving excessively, ensuring stable receiving of the second carrying arm 22 and the device reel 11 or the third carrying arm 32, and thus ensuring the motion accuracy.

Optionally, as shown in FIG. 1, for a particular way of unloading the material 1 from the device reel 11, the winding-unwinding device 10 further comprises a material stripping mechanism 12, the device reel 11 may be a roller shaft, and the device reel 11 is configured for enabling the material 1 to be sleeved onto it. The second carrying arm 22 is capable of ascending to a height where the device reel 11 is located, such that the material stripping mechanism 12 is capable of guiding the material 1 sleeved onto the device reel 11 to move in an axial direction of the device reel 11, and transferring the material 1 from the device reel 11 to the second carrying arm 22, thereby conveniently unloading the material 1 from the device reel 11.

Optionally, as shown in FIG. 1, for a particular way of loading the material 1 from the second carrying arm 22 to the device reel 11, the elevation device 20 may further comprise a material pushing mechanism 23 provided on the second carrying arm 22; the second carrying arm 22 is a roller shaft, and is configured for enabling the material 1 to be sleeved onto it. The second carrying arm 22 may ascend to a height where the device reel 11 is located, that is, the second carrying arm 22 is coaxially arranged with the device reel 11, such that the material pushing mechanism 23 is capable of guiding the empty volume of material 1 sleeved onto the second carrying arm 22 to move in an axial direction of the second carrying arm 22 so as to release the material 1, thereby transferring the material 1 more smoothly from the second carrying arm 22 to the device reel 11.

Optionally, for the second carrying arm 22 and the device reel 11 in the roller shaft structure, a plurality of rolling elements may be provided both on the circumferential surface of the second carrying arm 22 and the circumferential surface of the device reel 11. The material 1 is in rolling contact with the second carrying arm 22 and the device reel 11 respectively through the rolling elements so as to reduce the friction, such that the material 1 moves more smoothly on the second carrying arm 22 or the device reel 11.

Optionally, the second carrying arm 22 has a retractable restraining component 24 provided at one end thereof facing toward the device reel 11, and the restraining component 24 may be a structure such as a restraining pin or a restraining bump, and the second carrying arm 22 may be provided therein with a jacking device such as an air cylinder or a spring for connecting the restraining component 24. When the material 1 is sleeved onto the second carrying arm 22, the jacking device drives the restraining component 24 to jack up so that the restraining component 24 may extend outward of the second carrying arm 22, so as to restrain the material 1 and prevent abnormal separation of the material 1 from the second carrying arm 22. When it is necessary for the jacking device to drive the restraining component 24 to retract into the second carrying arm 22, the restraint of the material 1 can be released by the restraining component 24. At this time, the material 1 may be separated from the second carrying arm 22 so that the material 1 is transferred to the device reel 11 or the third carrying arm 32.

Further, as shown in FIG. 1, the second carrying arm 22 may comprise a cantilever section 221 and a shaft section 222, wherein the elevation mechanism 21, the cantilever section 221, and the shaft section 222 are connected in sequence; the restraining component 24 is provided at one end of the shaft section 222 facing away from the cantilever section 221; the material pushing mechanism 23 may be provided on the cantilever section 221 of the material pushing mechanism 23; the cantilever section 221, at a part of an end face thereof, is configured for connecting the shaft section 222, and at another part of the end face, forms a shaft shoulder facing toward the shaft section 222, and the material 1 sleeved onto the shaft section 222 is capable of being restrained between the shaft shoulder and the restraining component 24, thereby achieving better restraining and fixing of the material 11.

Optionally, as shown in FIGS. 1 to 3, the winding-unwinding device 10, the elevation device 20, the translation device 30, and the transport vehicle 40 may be laid out in specific positions according to actual needs. For example, the elevation device 20 in the present disclosure may also comprise a rotating mechanism 25, which may be a motor and the like. The rotating mechanism 25, the elevation mechanism 21, and the second carrying arm 22 are connected in sequence. The rotating mechanism 25 can drive the second carrying arm 22 to rotate along with the elevation mechanism 21, so as to adjust the transportation direction of the second carrying arm 22 to be parallel with the transportation direction of the device reel 11, i.e., coaxially setting the second carrying arm 22 and the device reel 11. At this point, material 1 can be transferred between the second carrying arm 22 and the device reel 11, as specifically shown in FIG. 1. The rotating mechanism 25 can also drive the second carrying arm 22 to rotate along with the elevation mechanism 21 to adjust the transportation direction of the second carrying arm 22 to be parallel with the transportation direction of the third carrying arm 32, as specifically shown in FIGS. 2 and 3.

Optionally, as shown in FIGS. 1 and 4, the third carrying arm 32 is provided in a plurality along a translation direction of the translation mechanism 31; each third carrying arm 32 is an overhanging structure, and is provided with a groove 33 in which at least a portion of the material 1 is accommodated. Similarly, the fourth carrying arm 42 is also provided in a plurality along a translation direction of the translation mechanism 31; each fourth carrying arm 42 is an overhanging structure, and is provided with a groove 33. In this way, by providing the plurality of third carrying arms 32 and the plurality of fourth carrying arms 42, it is possible to better receive the material 1, and by providing the groove, it is possible to prevent abnormal shaking of the material 1.

Optionally, the shape of the groove surface of the groove 33 may be a V shape, an arc shape, or the like to match the shape of the material 1. The groove surface of the groove 33 may also be provided with a padding 331 to prevent the material 1 from being worn.

Optionally, the transport vehicle 40 may further comprise a lifting mechanism 43 connected to the fourth carrying arm 42; the translation mechanism 31 is capable of driving the third carrying arm 32 to move away from the elevation device 20, and the fourth carrying arm 42 is capable of approaching the translation device 30 along with the vehicle body 41, such that the lifting mechanism 43 is capable of driving the fourth carrying arm 42 to ascend and descend, enabling it to pick up the material 1 on the third carrying arm 32, or to transfer the material 1 located on the fourth carrying arm 42 to the third carrying arm 32.

By providing the lifting mechanism 43, it is possible to better realize transfer of the material 1 between the fourth carrying arm 42 and the third carrying arm 32. It is specified as follows:
As shown in FIG. 3, when the transport vehicle 40 corresponds to the slider 312 in the transporting direction of the transport vehicle 40, the third carrying arm 32 and the fourth carrying arm 42 are slightly offset in the transporting direction of the transport vehicle 40. For example, an interval between the fourth carrying arms 42 arranged in pairs is smaller than an interval between the third carrying arms 32 arranged in pairs. When the transport vehicle 40 approaches the translation device 30, the two fourth carrying arms 42 may be accommodated between the two third carrying arms 32. Thus, the process of transferring the material 1 from the fourth carrying arm 42 to the third carrying arm 32 is as follows:
when it is necessary for the material 1 to be transferred from the fourth carrying arm 42 to the third carrying arm 32, the lifting mechanism 43 may drive the fourth carrying arm 42 first to be lifted to a position higher than the height where the third carrying arm 32 is located, such that the height where the material 1 on the fourth carrying arm 42 is located is greater than the height where the third carrying arm 32 is located, as specifically shown in FIGS. 8 and 9.

Subsequently, the transport vehicle 40 drives the fourth carrying arm 42 to approach the translation device 30, such that the fourth carrying arm 42 moves to coincide with the third carrying arm 32 in the transporting direction of the translation mechanism 31, as specifically shown in FIGS. 6 and 7.

Subsequently, the lifting mechanism 43 may drive the fourth carrying arm 42 to descend to a position lower than height where the third carrying arm 32 is located, such that the material 1 on the fourth carrying arm 42 is received by the third carrying arm 32, as specifically shown in FIGS. 4 and 5.

The process of transferring the material 1 from the third carrying arm 32 to the fourth carrying arm 42 is as follows:
after the third carrying arm 32 receives the material 1 from the second carrying arm 22, the translation mechanism 31 drives the third carrying arm 32 to move away from the elevation device 20, so as to drive the slider 312 to move to correspond to the transport vehicle 40, as specifically shown in FIGS. 4 and 5.

The lifting mechanism 43 drives the fourth carrying arm 42 to descend to a position lower than third carrying arm 32, such that the height where the fourth carrying arm 42 is located is less than height where the material 1 is located; subsequently, the transport vehicle 40 guides the fourth carrying arm 42 to approach the translation device 30, such that the fourth carrying arm 42 and the third carrying arm 32 are coincided in the transporting direction of the translation mechanism 31; then, the lifting mechanism 43 drives the fourth carrying arm 42 to ascend to a position higher than third carrying arm 32, so as to transfer the material 1 from the third carrying arm 32 to the fourth carrying arm 42, as specifically shown in FIGS. 6 and 7.

After the fourth carrying arm 42 receives the material 1, the transport vehicle 40 guides the material 1 to move back along with the fourth carrying arm 42, so as to move the material 1 away from the translation device 30, as specifically shown in FIGS. 8 and 9.

It can be seen that by providing the lifting mechanism 43, it is possible to better realize the transfer of the material 1 between the third carrying arm 32 and the fourth carrying arm 42.

The detailed working steps of the loading-unloading machine of the present disclosure are as follows:
First, the process of unloading the material 1 is described as follows:
as shown in FIG. 1, the device reel 11 stores the full volume of material 1, the elevation mechanism 21 drives the second carrying arm 22 to ascend until the second carrying arm 22 corresponds to the device reel 11, that is, the second carrying arm 22 and the device reel 11 are at the same height; at the same time, the rotating mechanism 25 drives the second carrying arm 22 to rotate so as to adjust the transporting direction of the second carrying arm 22 to coincide with the device reel 11, i.e., the device reel 11 is coaxially arranged with the second carrying arm 22; and then, the material stripping mechanism 12 pushes the full volume of material 1 to be transferred from the device reel 11 to the second carrying arm 22.

As shown in FIGS. 2 and 3, after the second carrying arm 22 receives the full volume of material 1, the rotating mechanism 25 drives the second carrying arm 22 to rotate by 90° to adjust the transporting direction of the second carrying arm 22 to be consistent with the transporting direction of the translation device 30.

As shown in FIGS. 4 and 5, the translation mechanism 31 drives the third carrying arm 32 to approach the elevation device 20 until the third carrying arm 32 corresponds to the second carrying arm 22 in the elevation direction of the elevation device 20; subsequently, the elevation mechanism 21 guides the second carrying arm 22 to descend to a height where the third carrying arm 32 is located, such that the full volume of material 1 is received by the third carrying arm 32.

As shown in FIGS. 6 and 7, after the full volume of material 1 is received by the third carrying arm 32, the translation mechanism 31 drives the third carrying arm 32 to move away from the elevation device 20 until the slider 312 corresponds to the transport vehicle 40 in the transporting direction of the transport vehicle 40; subsequently, the lifting mechanism 43 drives the fourth carrying arm 42 to descend to a height lower than that of the third carrying arm 32, such that the height where the fourth carrying arm 42 is positioned is lower than the height of material 1 stored on the third carrying arm 32; subsequently, the fourth carrying arm 42 approaches the translation device 30 along with the vehicle body 41, such that the fourth carrying arm 42 and the third carrying arm 32 are overlapped along the transporting direction of the translation mechanism 31; then, the lifting mechanism 43 drives the fourth carrying arm 42 to ascend to a height higher than the third carrying arm 32, such that the full volume of material 1 is transferred from the third carrying arm 32 to the fourth carrying arm 42.

As shown in FIGS. 8 and 9, after the full volume of material 1 is received by the fourth carrying arm 42, the transport vehicle 40 moves back to get away from the translation device 30, so as to transport the full volume of material 1 to the predetermined position.

Then, the process of loading the material 1 is described as follows:
as shown in FIGS. 8 and 9, the empty volume of material 1 is loaded on the fourth carrying arm 42; at the same time, the lifting mechanism 43 drives the fourth carrying arm 42 to ascend to a height higher than that of third carrying arm 32, such that the height where the material 1 is positioned is higher than the third carrying arm 32; the translation mechanism 31 drives the third carrying arm 32 to move away from the elevation device 20, until the slider 312 corresponds to the transport vehicle 40 in the transporting direction of the transport vehicle 40.

As shown in FIGS. 6 and 7, the fourth carrying arm 42 approaches the translation device 30 along with the vehicle body 41, such that the fourth carrying arm 42 and the third carrying arm 32 are overlapped along the transporting direction of the translation mechanism 31; then, the lifting mechanism 43 drives the fourth carrying arm 42 to descend to a height lower than that of the third carrying arm 32, such that the empty volume of material 1 is transferred from the fourth carrying arm 42 to the third carrying arm 32.

As shown in FIGS. 4 and 5, after the third carrying arm 32 receive the empty volume of material 1, the transport vehicle 40 moves back to get away from the translation device 30, and at the same time, the rotating mechanism 25 drives the second carrying arm 22 to rotate, so as to adjust the transporting direction of the second carrying arm 22 to be consistent with the transporting direction of the translation mechanism 31; then, the elevation mechanism 21 guides the second carrying arm 22 to descend to the height where the third carrying arm 32 is located; subsequently, the translation mechanism 31 drives the third carrying arm 32 to approach the elevation device 20, such that the empty volume of material 1 is transferred from the third carrying arm 32 to the second carrying arm 22.

As shown in FIGS. 2 and 3, after the second carrying arm 22 receive the empty volume of material 1, the translation mechanism 31 guides the third carrying arm 32 to move away from the elevation device 20; at the same time, the elevation mechanism 21 drives the second carrying arm 22 to ascend to a height consistent with the height of the device reel 11.

As shown in FIG. 1, the rotating mechanism 25 guides the second carrying arm 22 to rotate by 90°, so as to adjust the transporting direction of the second carrying arm 22 to be consistent with the transporting direction of the device reel 11, that is, the second carrying arm 22 is coaxially arranged with the device reel 11; then, the material pushing mechanism 23 pushes the empty volume of material 1 to transfer it from the second carrying arm 22 to the device reel 11.

Subsequently, the empty volume of material 1 is wound in the winding-unwinding device 10 to form the full volume of material 1. Then, the process of unloading the material 1 may be performed to transfer the full volume of material 1 from the winding-unwinding device 10 to the transport vehicle 40.

The present disclosure further discloses a battery production apparatus, which may comprise the above loading-unloading machine.

Finally, it should be noted that the above embodiments are only used to illustrate the technical solutions of the present disclosure, not to limit them; although the present disclosure has been described in detail with reference to the foregoing embodiments, a person of ordinary skill in the art should understand that it is still possible to make modifications to the technical solutions documented in the foregoing embodiments, or to make equivalent substitutions for some or all of the technical features therein; and these modifications or substitutions do not take the essence of the corresponding technical solutions out of the scope of the technical solutions of the embodiments of the present disclosure.

## Claims

1. A loading-unloading machine for a material (1), **characterized by** comprising:
an elevation device (20) comprising an elevation mechanism (21) and a second carrying arm (22) connected to the elevation mechanism (21), the elevation mechanism (21) being capable of driving the second carrying arm (22) to ascend so as to receive or release the material (1);
a translation device (30) provided with a translation mechanism (31) and a third carrying arm (32) connected to the translation mechanism (31); wherein the elevation mechanism (21) is capable of guiding the second carrying arm (22) to descend to a height where the third carrying arm (32) is located, and the translation mechanism (31) is capable of driving the third carrying arm (32) to approach the elevation device (20), thereby enabling the material (1) to be transferred between the second carrying arm (22) and the third carrying arm (32); and
a transport vehicle (40) provided with a vehicle body (41) and a fourth carrying arm (42) connected to the vehicle body (41); wherein the translation mechanism (31) is capable of driving the third carrying arm (32) to move away from the elevation device (20), and the fourth carrying arm (42) is capable of approaching the translation device (30) along with the vehicle body (41), thereby enabling the material (1) to be transferred between the third carrying arm (32) and the fourth carrying arm (42).

2. The loading-unloading machine of claim 1, **characterized by** further comprising a winding-unwinding device (10) with a device reel (11); the third carrying arm (32) and the device reel (11) are respectively located at different heights of the loading-unloading machine;
the second carrying arm (22) is capable of ascending to a height where the device reel (11) is located, thereby enabling the material (1) to be transferred between the device reel (11) and the second carrying arm (22).

3. The loading-unloading machine of claim 2, **characterized in that** the winding-unwinding device (10) further comprises a material stripping mechanism (12), wherein the device reel (11) is a roller shaft, and the device reel (11) is configured for enabling the material (1) to be movably sleeved onto it,
the second carrying arm (22) is capable of ascending to a height where the device reel (11) is located, such that the material stripping mechanism (12) is capable of guiding the material (1) sleeved onto the device reel (11) to move in an axial direction of the device reel (11), and transferring the material (1) from the device reel (11) to the second carrying arm (22).

4. The loading-unloading machine of claim 1, **characterized in that** the elevation device (20) further comprises a material pushing mechanism (23) provided on the second carrying arm (22),
the second carrying arm (22) is a roller shaft, and is configured for enabling the material (1) to be movably sleeved onto it, and the second carrying arm (22) is capable of ascending to a height where the device reel (11) of the winding-unwinding device (10) is located, such that the material pushing mechanism (23) is capable of guiding the material (1) sleeved onto the second carrying arm (22) to move in an axial direction of the second carrying arm (22) so as to release the material (1).

5. The loading-unloading machine of claim 4, **characterized in that** the second carrying arm (22) has a retractable restraining component (24) provided at one end thereof facing toward the device reel (11), and the material (1) is capable of being sleeved onto the second carrying arm (22), such that the restraining component (24) is capable of extending outward from the second carrying arm (22) to restrain the material (1).

6. The loading-unloading machine of claim 5, **characterized in that** the second carrying arm (22) comprises a cantilever section (221) and a shaft section (222), wherein the elevation mechanism (21), the cantilever section (221), and the shaft section (222) are connected in sequence,
the restraining component (24) is provided at one end of the shaft section (222) facing away from the cantilever section (221),
the cantilever section (221), at a part of an end face thereof, is configured for connecting the shaft section (222), and at another part of the end face, forms a shaft shoulder facing toward the shaft section (222), and the material (1) sleeved onto the shaft section (222) is capable of being restrained between the shaft shoulder and the restraining component (24).

7. The loading-unloading machine of claim 1, **characterized in that** the elevation device (20) further comprises a rotating mechanism (25), wherein the rotating mechanism (25), the elevation mechanism (21), and the second carrying arm (22) are connected in sequence,
the rotating mechanism (25) is capable of driving the second carrying arm (22) to rotate along with the elevation mechanism (21), so as to adjust a transporting direction of the second carrying arm (22) to be parallel to a transporting direction of the device reel (11) of the winding-unwinding device (10),
and,
to adjust the transporting direction of the second carrying arm (22) to be parallel to a transporting direction of the third carrying arm (32).

8. The loading-unloading machine of any one of claims 1 to 7, **characterized in that** the third carrying arm (32) is provided in a plurality along a translation direction of the translation mechanism (31),
each third carrying arm (32) is an overhanging structure, and is provided with a groove (33) in which at least a portion of the material (1) is accommodated.

9. The loading-unloading machine of any one of claims 1 to 7, **characterized in that** the fourth carrying arm (42) is provided in a plurality along a translation direction of the translation mechanism (31),
each fourth carrying arm (42) is an overhanging structure, and is provided with a groove (33) in which at least a portion of the material (1) is accommodated.

10. The loading-unloading machine of claim 9, **characterized in that** the transport vehicle (40) further comprises a lifting mechanism (43) connected to the fourth carrying arm (42),
the translation mechanism (31) is capable of driving the third carrying arm (32) to move away from the elevation device (20), and the fourth carrying arm (42) is capable of approaching the translation device (30) along with the vehicle body (41), such that the lifting mechanism (43) is capable of driving the fourth carrying arm (42) to ascend and descend, enabling it to pick up the material (1) on the third carrying arm (32), or to transfer the material (1) located on the fourth carrying arm (42) to the third carrying arm (32).

11. A battery production apparatus, **characterized by** comprising the loading-unloading machine of any one of claims 1 to 10.
